# FASCICULE DE BREVET EUROPEEN

(11) **EP 3 645 376 B1**
(45) Date de publication et mention de la délivrance du brevet: **30.12.2020**
(21) Numéro de dépôt: 19740643.2
(22) Date de dépôt: 07.06.2019
(51) Int. Cl.: B62D 49/06

(54) **CHÂSSIS DE VÉHICULE AGRICOLE DE LARGEUR RÉGLABLE ET VÉHICULE AGRICOLE**
KAROSSERIE EINES LANDWIRTSCHAFTLICHEN FAHRZEUGS MIT VERSTELLBARER BREITE UND LANDWIRTSCHAFTLICHES FAHRZEUG
AGRICULTURAL VEHICLE CHASSIS WITH ADJUSTABLE WIDTH AND AGRICULTURAL VEHICLE

(30) Priorité: 08.06.2018 FR 1855044
(43) Date de publication de la demande: 06.05.2020
(73) Titulaire: Cybelium Technologies, 11600 Conques-sur-Orbiel (FR)
(72) Inventeur: CROUZAT, Pierre, 11600 CONQUES-SUR ORBIEL (FR)
(74) Mandataire: BARRE LAFORGUE
(86) Numéro de dépôt international: PCT/FR2019/051375
(87) Numéro de publication internationale: WO 2019/234369

(56) Documents cités:
- EP-A1- 3 318 430
- WO-A1-2015/197173
- FR-A- 329 501
- US-A1- 2015 291 233
- US-B1- 6 371 237

## Description

L'invention concerne un châssis de véhicule agricole dont la largeur est réglable et un véhicule agricole doté d'un tel châssis. Les documents FR329501A et WO2015197173A1 décrivent des dispositifs similaires.

Le réglage de la largeur d'un châssis de véhicule agricole permet d'adapter le véhicule agricole à différentes utilisations, en fonction des dimensions des plantations pour lesquels le véhicule est utilisé et/ou des traitements agricoles à effectuer. On connaît déjà des véhicules agricoles du type enjambeur de largeur et/ou voie réglable grâce à des traverses télescopiques et/ou à des vérins reliant deux demi-châssis latéraux.

De telles traverses télescopiques nécessitent des moyens de guidage en translation particulièrement complexes et coûteux, du type de ceux des bras télescopiques d'engins de chantier, de façon à éviter la présence de tous jeux intempestifs entre les deux demi-châssis. Il est à noter à ce titre que les usures de ces moyens de guidage ont pour conséquence l'apparition ou l'augmentation des jeux en flexion dans les traverses télescopiques, de tels jeux ayant également pour conséquence d'augmenter les usures, les contraintes, les chocs et les risques de rupture.

En outre, de telles traverses qui travaillent essentiellement en flexion induisent des contraintes très importantes sur ces moyens de guidage qui, en pratique, doivent être largement surdimensionnés, et ce pour la position de largeur maximale du châssis (alors que la durée d'utilisation du véhicule dans cette position est en pratique dans la plupart des cas très faible, voire nulle). Par ailleurs, de telles traverses télescopiques présentent l'inconvénient d'une diminution de la résistance en flexion des moyens de guidage au fur et à mesure du déploiement.

En outre, de tels traverses télescopiques et/ou vérins offrent une faible amplitude de variation de la largeur du châssis rapportée à l'encombrement minimal en largeur du châssis. En effet, chaque traverse télescopique étant formée d'une barre interne coulissant dans une barre externe, l'amplitude de variation de la largeur du châssis est limitée par la longueur de la barre interne, et cette dernière est limitée par la longueur de la barre externe, sauf à accepter que la barre interne s'étende en saillie au-delà de l'extrémité extérieure de la barre externe, au détriment de l'encombrement en largeur du châssis et du véhicule. Or, il est à noter que l'encombrement en largeur d'un véhicule agricole constitue un paramètre très important à l'utilisation du véhicule agricole, notamment en position de largeur minimale. En effet, cet encombrement doit être compatible avec la circulation du véhicule agricole sur le terrain, entre les rangs de plants. En outre, le véhicule agricole ne doit pas présenter de tiges ou barres en saillie latéralement, qui pourraient constituer un risque important en termes de sécurité de circulation, aussi bien pour le véhicule lui-même que pour les tiers. Ainsi, par exemple pour une dimension minimale en largeur de l'ordre de 0,8 m, correspondant à la longueur totale de la barre interne d'une traverse télescopique, l'augmentation de largeur du châssis est au maximum de l'ordre de 0,6 m, soit une largeur maximale de 1,4 m.

Également, l'actionnement non manuel de telles traverses télescopiques pose problème, la démultiplication des mouvements étant en général impossible ou complexe, coûteuse, lourde et encombrante.

Également, de telles traverses télescopiques sont peu compatibles avec les véhicules agricoles qui sont le plus souvent utilisés dans des conditions environnementales sévères, en présence de projections de boue, cailloux, sables, de terres..., soumis à la corrosion et aux attaques chimiques. De telles conditions présentent en effet le risque d'un vieillissement prématuré des moyens de guidage, ou de l'introduction de particules solides entre les barres des traverses télescopiques, pouvant entraîner des coincements ou des usures prématurées. Les protections pouvant être apportées pour protéger les moyens de guidage de l'extérieur, qui peuvent être formées de soufflets, joints ou membranes, sont elles-mêmes sujettes à l'usure et au vieillissement et doivent faire l'objet de vérifications périodiques et de maintenance.

En outre, de telles traverses télescopiques ne sont pas optimales du point de vue de la rigidité générale et de la résistance aux déformations du châssis.

L'invention vise donc à pallier ces inconvénients.

Elle vise en particulier à proposer un châssis de véhicule agricole de largeur réglable qui soit plus simple, plus économique, dans lequel les jeux et les contraintes sont maîtrisés de façon simple et économique, de façon similaire pour toutes les valeurs de largeur du châssis, sans nécessiter de surdimensionnement.

L'invention vise également à proposer un châssis de véhicule agricole présentant une amplitude de variation de largeur importante, sans obérer l'encombrement en largeur du véhicule, notamment son encombrement minimum en position de largeur minimum. L'invention vise également à ce titre à proposer un châssis de véhicule agricole procurant une sécurité d'utilisation parfaite.

L'invention vise également à proposer un châssis de véhicule agricole de largeur réglable et compatible avec son utilisation dans tous les environnements agricoles, y compris les plus sévères, présentant une grande durée de vie et ne nécessitant pas des opérations spécifiques régulières de vérification et de maintenance.

Elle vise également à proposer un châssis de véhicule agricole dont la rigidité générale rapportée à son poids total est augmentée.

Elle vise également à proposer un châssis de véhicule agricole permettant la réalisation d'un véhicule agricole polyvalent, et l'installation simple et rapide de différents dispositifs de traitement agricole permettant l'utilisation du véhicule agricole pour les différents traitements agricoles à effectuer au cours des saisons.

Elle vise également à proposer un châssis permettant la réalisation de différents types de véhicules agricoles : automoteurs pilotés par un pilote embarqué, automoteurs pilotés à distance, notamment télécommandés, robotisés,...

L'invention vise également à proposer un véhicule agricole présentant les mêmes avantages.

Pour ce faire, l'invention concerne un châssis de véhicule agricole comprenant :
- deux demi-châssis latéraux reliés l'un à l'autre à distance l'un de l'autre de façon à former une structure rigide,
- un dispositif d'ajustement de la distance relative entre les deux demi-châssis latéraux, ledit dispositif d'ajustement comprenant :
   - au moins un compas :
      ∘ comprenant deux bras rigides articulés l'un à l'autre par une articulation, dite articulation centrale :
         ▪ comprenant un pivot,
         ▪ et permettant d'orienter les deux bras l'un par rapport à l'autre de façon à ce qu'ils forment entre eux un angle, dit angle de compas, compris entre 0° et 180°,
      ∘ chaque bras du compas étant articulé respectivement à l'un des deux demi-châssis latéraux par une articulation, dite latérale, comprenant un pivot,
      ∘ lesdits pivots de l'articulation centrale et des articulations latérales présentant des axes de pivots qui sont parallèles entre eux,
   - un dispositif de réglage de l'angle de compas, ce dispositif de réglage de l'angle de compas étant adapté pour permettre un blocage de l'angle de compas après réglage,
caractérisé en ce que le dispositif de réglage de l'angle de compas d'au moins un compas -notamment de chaque compas- comporte un vérin comprenant un corps porté par l'un des deux bras du compas et une tige d'actionnement articulée à l'autre bras du compas.

Un châssis et un véhicule agricole selon l'invention définissent un axe principal d'avancement, dit axe longitudinal, correspondant à un axe privilégié d'avancement du véhicule agricole lorsqu'il effectue des travaux agricoles. Cet axe longitudinal est aussi en général l'axe selon lequel le châssis selon l'invention présente la plus grande dimension hors tout. La largeur d'un châssis selon l'invention est une dimension de ce dernier selon un axe horizontal orthogonal audit axe longitudinal. De même, une orientation vers l'avant et une orientation vers l'arrière peuvent être définies selon ledit axe longitudinal, soit que le véhicule agricole selon l'invention présente un sens privilégié, dit sens avant, d'avancement selon ledit axe longitudinal ; soit au contraire que le véhicule agricole selon l'invention soit adapté pour pouvoir se déplacer dans les deux sens selon ledit axe longitudinal, auquel cas l'une quelconque des extrémités longitudinales du châssis est désignée extrémité avant, l'autre extrémité longitudinale opposée étant désignée extrémité arrière.

Dans un châssis selon l'invention, le réglage de la distance séparant les deux demi-châssis latéraux, c'est-à-dire de la largeur du châssis, implique des mouvements de rotation selon des pivots qui présentent des caractéristiques mécaniques sensiblement constantes et subissent des contraintes mécaniques similaires dans toute la plage de variations de la largeur du châssis. De tels pivots sont en outre particulièrement simples et économiques, de faibles poids et encombrement, et de caractéristiques mécaniques parfaitement maîtrisées depuis de longues années. Ils sont beaucoup mieux compatibles avec les environnements sévères agricoles que les guidages en translation. Ils présentent une grande durée de vie, et ne nécessitent pas des opérations spécifiques régulières de vérification et de maintenance.

En outre, un ajustement en largeur par compas permet d'obtenir une grande variation de dimensions en largeur, pouvant typiquement être comprise entre 0,5 m et 3 m (en particulier entre 0,8 m et 2 m), sans obérer l'encombrement en largeur du châssis, notamment pour la valeur minimale de la largeur.

L'invention s'applique dans certains modes de réalisation dans lesquels les deux demi-châssis latéraux ne sont pas strictement identiques l'un à l'autre, voire sont différents dans leurs formes et dimensions. Néanmoins, dans certains modes de réalisation avantageux selon l'invention, les deux demi-châssis latéraux présentent les mêmes formes et dimensions.

Dans un châssis selon l'invention, chaque compas constitue également une liaison mécanique rigide (mais ajustable en largeur) entre les deux demi-châssis latéraux. L'invention permet en particulier de limiter, voire de supprimer tout guidage en translation pour l'ajustement en largeur du châssis. Rien n'empêche cependant de prévoir certaines pièces guidées en translation en tant que de besoin. Néanmoins, même dans cette variante, l'ajustement en largeur peut être obtenu principalement par chaque compas du dispositif d'ajustement, et par le dispositif de réglage de l'angle de compas correspondant, de sorte que les éventuelles pièces guidées en translation ne supportent pas l'essentiel des efforts impartis entre les deux demi-châssis latéraux.

En outre, contrairement à un guidage en translation, un guidage en rotation peut être actionné par un actionneur associé à une transmission, cet actionneur et cette transmission pouvant être choisis de façon à optimiser leurs caractéristiques propres en termes de puissance et de débattement, de façon simple, économique, légère et peu encombrante.

Par ailleurs, un châssis selon l'invention présente également l'avantage de simplifier grandement la liaison mécanique entre les deux demi-châssis latéraux et l'actionnement du dispositif d'ajustement, qui peut être motorisé simplement.

Ainsi, dans certains modes de réalisation avantageux conformes à l'invention ledit dispositif d'ajustement, qui constitue la liaison mécanique entre les deux demi-châssis latéraux, comprend au moins un actionneur (ce terme désignant tout dispositif délivrant de l'énergie mécanique à partir d'une énergie d'une nature autre que mécanique : vérin, moteur...) d'au moins un dispositif de réglage de l'angle de compas d'au moins un compas.

Plus particulièrement, dans certains modes de réalisation avantageux de l'invention, ledit dispositif d'ajustement comprend à titre d'actionneur exclusivement au moins un tel actionneur d'au moins un dispositif de réglage de l'angle de compas d'au moins un compas. Autrement dit, seul au moins un compas -notamment chaque compas- du dispositif d'ajustement est actionné, et ledit dispositif d'ajustement est exempt de tout autre actionneur.

De préférence, le dispositif d'ajustement comprend également au moins un vérin de renforcement comprenant :
- un corps porté par l'un parmi un demi-châssis latéral et un bras d'un compas, le bras étant articulé à ce demi-châssis, et
- une tige d'actionnement porté par l'autre parmi ce même demi-châssis latéral et ce bras de ce même compas.

Ce vérin de renforcement permet d'éviter une rotation non souhaitée au niveau des liaisons entre chaque bras du compas et les deux demi-châssis. Ainsi, le vérin de renforcement permet d'éviter un déplacement des demi-châssis l'un par rapport à l'autre. De préférence, le dispositif d'ajustement comprend un vérin de renforcement pour chaque compas de façon à améliorer la rigidité du châssis.

Avantageusement et selon l'invention, lesdits pivots de l'articulation centrale et des articulations latérales de chaque compas sont des pivots non glissants (c'est-à-dire sans possibilité de translation parallèlement à l'axe de pivot) et présentent des axes de pivots qui sont parallèles entre eux.

Dans certains modes de réalisation avantageux de l'invention, ladite articulation centrale d'au moins un compas -notamment de chaque compas-comprend un pivot non glissant à axe vertical (c'est-à-dire orthogonal au plan de roulement des roues du véhicule qui est supposé horizontal) -notamment est formée d'un pivot non glissant à axe vertical-. De même, chaque articulation latérale d'au moins un compas -notamment de chaque compas- comprend un pivot non glissant à axe vertical -notamment est formée d'un pivot non glissant à axe vertical-. Un tel compas dont les axes de pivot sont verticaux et dont les bras sont des poutres droites s'étend dans un plan horizontal. Dans ces modes de réalisation, un châssis selon l'invention comprenant une pluralité de compas présente une rigidité améliorée grâce à un effet d'arcs-boutant résultant des compas.

Rien n'empêche cependant dans certaines variantes de prévoir que ladite articulation centrale d'au moins un compas -notamment de chaque compas-comprenne un pivot non glissant à axe non vertical (c'est-à-dire non orthogonal au plan de roulement des roues du véhicule qui est supposé horizontal) -notamment que ladite articulation centrale soit formée d'un pivot non glissant à axe non vertical-. Rien n'empêche également de prévoir que les articulations latérales d'au moins un compas -notamment de chaque compas- comprennent chacune un pivot non glissant à axe non vertical -notamment que chaque articulation latérale soit formée d'un pivot non glissant à axe non vertical-. Un tel compas s'étend alors dans un plan non horizontal et peut être incliné par exemple vers le haut ou vers le bas par rapport aux demi-châssis latéraux. Il est même possible de prévoir que les pivots des articulations centrale et latérales d'au moins un compas -notamment de chaque compas- présentent des axes de pivots horizontaux. Un tel compas dont les bras sont des poutres droites s'étend alors dans un plan vertical.

Rien n'empêche également dans certaines variantes de prévoir une articulation centrale présentant d'autres degrés de liberté, selon les besoins, par exemple sous forme d'une rotule, à condition cependant de prévoir un dispositif de réglage correspondant permettant de contrôler chaque autre degré de liberté et de le bloquer après réglage.

Rien n'empêche également en variante de prévoir au moins une articulation latérale d'au moins un compas -notamment de chaque compas- présentant d'autres degrés de liberté, selon les besoins, par exemple sous forme d'une rotule, à condition cependant de prévoir un dispositif de réglage correspondant permettant de contrôler chaque autre degré de liberté et de le bloquer après réglage.

Les bras rigides de chaque compas d'un châssis selon l'invention peuvent faire l'objet de diverses variantes de réalisation. Tout dispositif permettant de définir une distance entre deux extrémités (correspondant l'une à l'articulation centrale, l'autre à une articulation latérale) peut être utilisé à titre de bras rigide dans un compas d'un châssis selon l'invention. Dans certains modes de réalisation préférentiels ces bras sont formés de poutres droites, par exemple de profilés métalliques ; rien n'empêche cependant de prévoir des bras présentant des formes distinctes d'une droite, par exemple courbés dans un plan horizontal et/ou dans un plan vertical et/ou dans tout autre plan, ou en forme de lignes brisées... Rien n'empêche également de prévoir au moins un bras rigide -notamment les bras rigides d'au moins un compas -notamment de chaque compas- de longueur ajustable, par exemple sous forme de bras télescopiques. De préférence les deux bras rigides d'au moins un même compas -notamment de chaque compas- présentent la même longueur. Rien n'empêche cependant de prévoir un compas -notamment chaque compas- présentant des bras rigides de longueurs différentes, si le besoin s'en fait sentir.

Dans un châssis selon l'invention, le dispositif de réglage de l'angle de compas peut faire l'objet de diverses variantes structurelles dès lors qu'il permet un réglage effectif de la valeur d'angle de compas et son blocage après réglage. Par exemple, un tel dispositif de réglage de l'angle de compas peut coopérer avec l'articulation centrale et/ou au moins une articulation latérale et/ou chaque articulation latérale du compas. Avantageusement et selon l'invention, le dispositif de réglage de l'angle de compas d'au moins un compas -notamment de chaque compas- est adapté pour permettre un réglage angulaire de l'articulation centrale et un blocage de ladite articulation centrale après réglage.

Dans un châssis selon l'invention l'angle de compas de chaque compas reste orienté toujours dans le même sens par rapport audit axe longitudinal, c'est-à-dire soit vers l'avant soit vers l'arrière, quelle que soit la valeur de la largeur du châssis.

Rien n'empêche par principe que l'angle de compas puisse prendre la valeur 0° et/ou la valeur 180°. Néanmoins, dans certains modes de réalisation avantageux, le dispositif de réglage de l'angle de compas d'au moins un compas -notamment de chaque compas- est adapté pour imposer une valeur de l'angle de compas supérieure à 0° et inférieure à 180°, valeurs exclues. De la sorte, les deux bras du compas forment toujours entre eux un angle non nul, ce qui confère en pratique une grande rigidité générale au châssis selon l'invention et facilite grandement l'actionnement du dispositif de réglage. En outre, les deux bras ne pouvant pas être alignés l'un par rapport à l'autre, on évite tout risque de blocage intempestif. En pratique, avantageusement et selon l'invention, le dispositif de réglage est adapté pour imposer une valeur d'angle de compas supérieure ou égale à 20°, plus particulièrement supérieure ou égale à 30°, encore plus particulièrement supérieure ou égale à 45°. De même, avantageusement et selon l'invention, le dispositif de réglage est adapté pour imposer une valeur d'angle de compas inférieure ou égale à 160°, plus particulièrement inférieure ou égale à 150°, encore plus particulièrement inférieure ou égale à 145°.

Ledit dispositif d'ajustement d'un châssis selon l'invention peut comporter un nombre de compas qui peut varier, selon les besoins et les applications.

En particulier, rien n'empêche de prévoir dans certaines variantes que ledit dispositif d'ajustement comprenne un unique compas, par exemple placé au centre du châssis selon ledit axe longitudinal. Dans ces variantes, chaque articulation latérale est dotée d'un dispositif de blocage permettant de la bloquer en position après ajustement de la largeur du châssis, c'est-à-dire après réglage de l'angle de compas, de sorte que la position angulaire de chaque demi-châssis latéral par rapport à chaque bras de compas auquel il est articulé est maintenue fixe, l'orientation de chaque demi-châssis latéral l'un par rapport à l'autre et par rapport audit axe longitudinal restant la même quelle que soit la largeur du châssis.

Dans d'autres variantes, avantageusement et selon l'invention ledit dispositif d'ajustement comprend au moins deux compas. En particulier, ledit dispositif d'ajustement comporte avantageusement une pluralité de compas uniformément répartis selon ledit axe longitudinal, orientés dans le même sens et/ou en sens contraires. Par exemple, ledit dispositif d'ajustement peut comporter au moins un compas avant, au moins un compas central et au moins un compas arrière.

Ainsi, dans ces variantes, ledit dispositif d'ajustement comprend une pluralité de compas et une unité de commande du dispositif de réglage de l'angle de compas des différents compas, cette unité de commande étant adaptée pour maintenir une même orientation relative des deux demi-châssis latéraux l'un par rapport à l'autre et par rapport audit axe longitudinal. En particulier, les deux demis-châssis latéraux sont maintenus globalement parallèles l'un à l'autre et à l'axe longitudinal. De préférence, ladite unité de commande est également adaptée pour commander le dispositif de réglage de l'angle de compas des différents compas en synchronisme.

Dans certains modes de réalisation avantageux selon l'invention ledit dispositif d'ajustement comprend au moins un compas avant dont le sommet de l'angle de compas est orienté vers l'avant et au moins un compas arrière dont le sommet de l'angle de compas est orienté vers l'arrière. En particulier, ledit dispositif d'ajustement comprend un compas avant et un compas arrière. Dans ces modes de réalisation, ladite unité de commande est adaptée pour commander le dispositif de réglage de l'angle de compas des compas avant et arrière.

Dans certains modes de réalisation avantageux selon l'invention ledit dispositif d'ajustement comprend deux compas à angles de compas en opposition orientés vers l'extérieur l'un par rapport à l'autre, c'est-à-dire un compas avant à angle de compas dont le sommet est orienté vers l'avant et un compas arrière à angle de compas dont le sommet est orienté vers l'arrière. Cette disposition permet en effet d'une part de ménager un espace central optimal pour loger des dispositifs (notamment instruments, appareils ou outillages) de traitement agricole, et, d'autre part, confère une inertie et une rigidité optimales au châssis par un effet d'arc-boutant, en particulier dans le cas où les axes de pivot des articulations centrales et latérales des compas sont verticaux comme indiqué ci-dessus.

Dans les modes de réalisation dans lesquels le dispositif d'ajustement comprend une pluralité de compas, de préférence, les différents compas ont les mêmes dimensions et, en toute position d'ajustement de la largeur du châssis, les mêmes valeurs d'angle de compas. En particulier, les compas avant et arrière ont les mêmes dimensions et les mêmes angles de compas. De la sorte, il suffit que les variations de l'angle de compas commandées par l'unité de commande soient les mêmes pour les différents compas pour assurer le maintien de l'orientation relative des deux demi-châssis latéraux l'un par rapport à l'autre, notamment leur parallélisme, quelle que soit la largeur du châssis.

Selon un autre aspect, l'invention concerne un châssis de véhicule agricole comprenant :
- deux demi-châssis latéraux reliés l'un à l'autre à distance l'un de l'autre de façon à former une structure rigide,
- un dispositif d'ajustement de la distance relative entre les deux demi-châssis latéraux (et donc de la largeur du châssis),
   caractérisé en ce que chaque demi-châssis latéral comprend :
   - un longeron,
   - un montant avant s'étendant verticalement au moins vers le haut à partir d'une extrémité avant du longeron,
- un montant arrière s'étendant verticalement au moins vers le haut à partir d'une extrémité arrière du longeron.

Un tel châssis de véhicule agricole procure de nombreux avantages : il est compatible avec de très nombreux dispositifs (notamment instruments, appareils ou outillages) de traitement agricole qui peuvent être facilement installés et fixés rigidement au centre du châssis, entre les deux longerons et/ou à l'avant des montants avant et/ou à l'arrière des montants arrière, aussi bien à proximité immédiate du sol qu'en hauteur ; il présente une grande rigidité pour un poids réduit ; il permet le montage aisé de roues à l'avant des montants avant et à l'arrière des montants arrière ; il permet de réaliser facilement aussi bien un véhicule agricole automoteur piloté à distance, voire robotisé, qu'un véhicule agricole automoteur piloté par un opérateur humain ; il permet de recevoir au moins un siège destiné à recevoir un opérateur humain (pilote et/ou opérateur de traitement agricole) dont l'emplacement peut faire l'objet de nombreuses variantes en fonction de l'utilisation du véhicule agricole (par exemple à proximité du sol pour le maraîchage ou en hauteur pour le traitement d'arbustes)...

En particulier, l'invention concerne également un châssis de véhicule agricole comprenant :
- deux demi-châssis latéraux reliés l'un à l'autre à distance l'un de l'autre de façon à former une structure rigide,
- un dispositif d'ajustement de la distance relative entre les deux demi-châssis latéraux (et donc de la largeur du châssis),
   caractérisé en ce que ledit dispositif d'ajustement comprend au moins un compas formé de deux bras rigides articulés l'un à l'autre par une articulation, dite articulation centrale, comprenant un pivot non glissant à axe vertical, permettant d'orienter les deux bras l'un par rapport à l'autre de façon à ce qu'ils forment entre eux un angle, dit angle de compas, compris entre 0° et 180°, chaque bras du compas étant articulé respectivement à l'un des deux demi-châssis latéraux par une articulation, dite articulation latérale, comprenant un pivot non glissant à axe vertical,
   en ce que chaque demi-châssis latéral comprend :
   - un longeron,
   - un montant avant s'étendant verticalement au moins vers le haut à partir d'une extrémité avant du longeron,
   - un montant arrière s'étendant verticalement au moins vers le haut à partir d'une extrémité arrière du longeron,
et en ce que le dispositif d'ajustement comprend un compas avant s'étendant entre les montants avant articulé à ces derniers, et un compas arrière s'étendant entre les montants arrières et articulé à ces derniers.

Cette combinaison de caractéristiques procure également de nombreux avantages. Elle permet en particulier d'obtenir de façon simple et économique un châssis dont le rapport poids/rigidité est particulièrement faible ; présentant une grande polyvalence et permettant d'accepter un très grand nombre de dispositifs (notamment d'instruments et/ou d'appareils et/ou d'outillages) de traitement agricole différents ; dont l'ajustement en largeur est particulièrement simple et fiable et peut être effectué sur une grande plage de variation de largeur ; dont les caractéristiques mécaniques restent sensiblement les mêmes, notamment sans jeu et de grande rigidité, quelle que soit la largeur à laquelle il est ajusté ; qui est compatible avec tous les environnements agricoles, y compris les plus sévères ; qui présente une grande durée de vie et ne nécessite qu'une maintenance réduite ; qui permet la réalisation de divers types de véhicules agricoles : automoteurs pilotés par un pilote embarqué, automoteurs pilotés à distance, notamment télécommandés, robotisés,...

Dans certains modes de réalisation, les montants avant et arrière peuvent s'étendre également vers le bas à partir des extrémités correspondantes du longeron, le demi-châssis latéral présentant une forme générale de H. Dans ces modes de réalisation, de préférence les montants s'étendent vers le haut sur une hauteur supérieure à la hauteur qu'ils présentent vers le bas par rapport au longeron (le longeron étant en partie basse).

Plus particulièrement, dans certains modes de réalisation possibles, chaque demi-châssis latéral comprend :
- un longeron inférieur,
- un montant avant s'étendant verticalement vers le haut à partir d'une extrémité avant du longeron inférieur,
- un montant arrière s'étendant verticalement vers le haut à partir d'une extrémité arrière du longeron inférieur,
et en ce que le dispositif d'ajustement comprend un compas avant s'étendant entre les montants avant articulé à ces derniers, et un compas arrière s'étendant entre les montants arrières et articulé à ces derniers.

Plus particulièrement, les montants avant et arrière s'étendent exclusivement vers le haut à partir du longeron, le demi-châssis latéral présentant une forme générale de U.

Dans certains modes de réalisation avantageux conformes à l'invention, chaque compas est articulé entre des extrémités supérieures desdits montants. De la sorte, l'espace entre les deux demi-châssis latéraux est laissé libre sur toute la hauteur des montants.

Dans certains modes de réalisation avantageux d'un châssis selon l'invention, chaque demi-châssis latéral est formé d'une structure métallique rigide de poutres et plaques assemblées rigidement, notamment par boulonnage et/ou soudage et/ou rivetage.

En particulier, chaque demi-châssis latéral est avantageusement doté de paires de plaques perforées, les plaques de chaque paire de plaques perforées étant parallèles et espacées l'une de l'autre d'une distance identique pour toutes les paires de plaques perforées de ce façon à permettre l'insertion et l'assemblage par boulonnage d'au moins une bride de montage d'un dispositif de traitement agricole entre les deux plaques de chaque paire de plaques perforées. En particulier, les deux plaques de chaque paire de plaques perforées sont boulonnées l'une à l'autre et/ou de part et d'autre d'au moins une poutre du demi-châssis latéral.

Les plaques de ces paires de plaques perforées peuvent s'étendre selon toute orientation. Dans certains modes de réalisation selon l'invention chaque demi-châssis latéral est doté de paires de plaques verticales longitudinales perforées présentant des trous horizontaux transversaux, les plaques de chaque paire de plaques verticales longitudinales étant espacées transversalement l'une de l'autre d'une distance identique pour toutes les paires de plaques perforées de ce façon à permettre l'insertion et l'assemblage par boulonnage, entre les deux plaques de chaque paire, d'au moins une bride de montage d'un dispositif de traitement agricole. En particulier, les deux plaques de chaque paire de plaques perforées verticales longitudinales sont boulonnées l'une à l'autre et/ou d'un côté et de l'autre d'au moins une poutre - notamment d'un longeron et/ou d'un montant- du demi-châssis latéral.

En particulier, dans certains modes de réalisation possibles chaque demi-châssis latéral d'un châssis selon l'invention est constitué :
- d'un longeron inférieur,
   - d'un montant avant s'étendant verticalement vers le haut à partir d'une extrémité avant du longeron inférieur,
- d'un montant arrière s'étendant verticalement vers le haut à partir d'une extrémité arrière du longeron inférieur,
- de paires de plaques verticales longitudinales médianes perforées boulonnées d'un côté de l'autre du longeron inférieur,
- d'au moins une paire de plaques verticales longitudinales avant perforées boulonnées d'un côté de l'autre du montant avant,
- d'au moins une paire de plaques verticales longitudinales arrière perforées boulonnées d'un côté de l'autre du montant arrière.

Il s'avère en effet qu'une telle structure particulièrement simple présente de façon surprenante des performances mécaniques très élevées (notamment un faible rapport poids/rigidité et résistance) et une grande polyvalence en ce qui concerne l'installation des différents dispositifs de traitement agricole. En particulier, de tels dispositifs de traitement agricole de diverses natures peuvent être fixés entre les longerons inférieurs et entre les montants et/ou à l'avant des montants avant et/ou à l'arrière des montants arrière.

Dans certains modes de réalisation avantageux, un châssis selon l'invention comporte en outre au moins une platine s'étendant entre les deux demi-châssis latéraux et adaptée pour pouvoir supporter des équipements du véhicule agricole : siège et/ou moteur et/ou réservoir et/ou centrale hydraulique et/ou autre. Avantageusement, une telle platine présente une largeur correspondant à la largeur minimale du châssis selon l'invention, et est reliée à chaque demi-châssis latéral par des traverses reliées de façon à pouvoir coulisser par rapport à la platine lors de l'ajustement en largeur du châssis.

En particulier, un châssis selon l'invention comprend au moins une platine supérieure disposée sur le châssis à un niveau en hauteur supérieur à celui de chaque compas dudit dispositif d'ajustement.

Dans certains modes de réalisation possibles avantageux un châssis selon l'invention comprend une platine supérieure arrière s'étendant en porte-à-faux vers l'arrière au-dessus des extrémités supérieures des montants arrière. Une telle platine supérieure arrière peut être portée par une extension supérieure vers l'arrière des plaques boulonnées d'un côté et de l'autre de chaque montant arrière et/ou par des longerons arrière supérieurs fixés aux extrémités arrière des montants arrière.

L'invention s'étend à un véhicule agricole -notamment automoteur- comprenant un châssis selon l'invention.

Un véhicule agricole selon l'invention comprend avantageusement des roues montées en partie basse des montants du châssis. En particulier, il peut être prévu une roue avant montée en partie basse vers l'avant de chaque montant avant et une roue arrière montée en partie basse vers l'arrière de chaque montant arrière.

Dans certains modes de réalisation avantageux, chaque roue est directionnelle et indépendante, c'est-à-dire peut être orientée indépendamment des autres roues. Avantageusement, chaque roue est orientable par rapport à l'axe longitudinal selon un angle d'orientation pouvant être compris entre 0° et 90°. Pour un angle d'orientation de 0° de chacune des roues, le véhicule se déplace selon l'axe longitudinal. Pour un angle d'orientation de 90° de chacune des roues, le véhicule se déplace orthogonalement à l'axe longitudinal. En outre, pour un angle d'orientation de 90° de chacune des roues, l'ajustement en largeur du châssis, qui correspond à un ajustement de la voie du véhicule selon l'invention, peut être facilement réalisé.

En outre, dans certains modes de réalisation avantageux, chaque roue est motrice et indépendante, c'est-à-dire peut être entraînée en rotation indépendamment des autres roues. Avantageusement, chaque roue est accouplée à l'arbre moteur horizontal d'un moteur qui lui est propre. Ce moteur est porté à l'extrémité inférieure d'un porte-moyeu monté pivotant autour d'un axe vertical par rapport à un arceau assemblé au montant du demi-châssis latéral correspondant et portant un actionneur agencé pour contrôler la position angulaire du porte-moyeu. L'arceau est avantageusement assemblé au montant par l'intermédiaire d'une structure à parallélogramme déformable présentant deux pivots articulés l'un au-dessus de l'autre au montant selon des axes de pivotements horizontaux et deux pivots articulés l'un au-dessus de l'autre à l'arceau selon des axes de pivotements horizontaux.

L'invention concerne également un châssis et un véhicule agricole caractérisés, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront à la lecture de la description suivante donnée à titre non limitatif de certains de ses modes de réalisation possibles et qui se réfère aux figures annexées dans lesquelles :
- la figure 1 est une vue schématique en perspective de trois quarts avant et de dessus d'un châssis selon un mode de réalisation de l'invention, les roues étant orientées à 0°,
- la figure 2 est une vue schématique en perspective de trois quarts arrière et de dessus du châssis de la figure 1, les roues étant orientées à 90°,
- la figure 3 est une vue schématique de dessus du châssis de la figure 1 en position de largeur minimum,
- la figure 4 est une vue schématique de gauche du châssis de la figure 1 en position basse,
- la figure 5 est une vue schématique de gauche de la figure 4,
- la figure 6 est une vue schématique de dessus du châssis de la figure 1 en position de largeur maximum

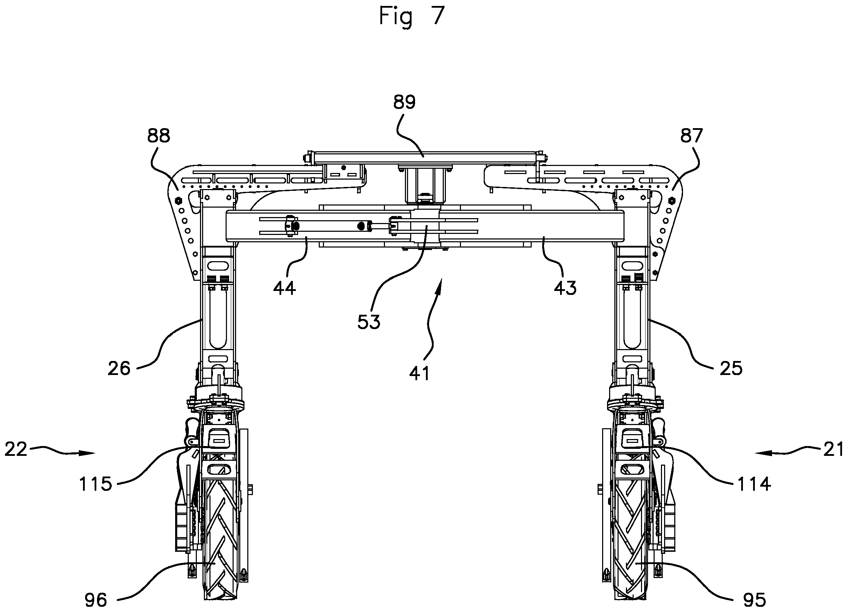

- la figure 7 est une vue schématique de l'avant du châssis de la figure 1 en position de largeur maximum,
- la figure 8 est une vue schématique de profil d'un véhicule agricole selon l'invention,
- la figure 9 est une vue schématique en perspective d'une bride de montage d'un outillage sur un châssis selon l'invention,
- la figure 10 est une vue schématique similaire à la figure 1 représentant un premier exemple d'outillage porté par le châssis selon l'invention,
- la figure 11 est une vue de l'avant et en coupe verticale partielle illustrant l'outillage la figure 10 en cours d'utilisation,
- la figure 12 est une vue schématique en perspective de côté et de dessus représentant un deuxième exemple d'outillage porté par le châssis selon l'invention.

Dans tout le texte, le châssis et le véhicule selon l'invention sont décrits en supposant que le sol sur lequel le véhicule repose est horizontal, le véhicule étant doté de roues définissant un plan de roulement qui est également supposé horizontal. Bien entendu, un véhicule selon l'invention peut également se déplacer sur un sol non horizontal.

Un châssis selon l'invention représenté sur les figures comprend :
- un demi-châssis latéral gauche 21 formé d'un longeron 23 inférieur horizontal longitudinal, d'un montant 25 avant s'étendant verticalement vers le haut à partir d'une extrémité 27 avant du longeron 23 inférieur, d'un montant 29 arrière s'étendant verticalement vers le haut à partir d'une extrémité 31 arrière du longeron 23 inférieur, d'une paire de plaques 33 verticales longitudinales avant fixées d'un côté et de l'autre du montant 25 avant, d'une paire de plaques 35 verticales longitudinales arrière fixées d'un côté et de l'autre du montant 29 arrière, et dans l'exemple représenté, de paires de plaques 37 verticales longitudinales fixées d'un côté et de l'autre du longeron 23 inférieur,
- un demi-châssis latéral droit 22 formé d'un longeron 24 inférieur horizontal longitudinal, d'un montant 26 avant s'étendant verticalement vers le haut à partir d'une extrémité 28 avant du longeron 24 inférieur, d'un montant 30 arrière s'étendant verticalement vers le haut à partir d'une extrémité 32 arrière du longeron 24 inférieur, d'une paire de plaques 34 verticales longitudinales avant fixées d'un côté et de l'autre du montant 26 avant, d'une paire de plaques 36 verticales longitudinales arrière fixées d'un côté et de l'autre du montant 30 arrière, et dans l'exemple représenté, de paires de plaques 38 verticales longitudinales fixées d'un côté et de l'autre du longeron 24 inférieur.

Les plaques 33 à 38 sont perforées par de multiples trous horizontaux transversaux permettant la fixation d'équipements ou de dispositifs de traitement agricole. Les plaques 33 à 38 de chaque paire de plaques sont similaires et fixées l'une à l'autre et/ou au montant 25, 26, 29, 30 ou au longeron 23, 24 correspondant par des boulons.

Les deux demi-châssis latéraux 21, 22 présentent les mêmes formes et dimensions. Ils sont reliés l'un à l'autre rigidement par un compas avant 41 et un compas arrière 42 définissant la distance transversale séparant les deux demi-châssis latéraux 21, 22, c'est-à-dire la largeur du châssis, et permettant un ajustement de cette largeur continûment entre une valeur minimum et une valeur maximum.

Le compas avant 41 comprend :
- un bras gauche 43 horizontal dont une extrémité 45 est librement articulée à l'extrémité supérieure 47 du montant 25 avant gauche par une articulation 49 latérale gauche formant un pivot non glissant à axe 51 de rotation vertical,
- un bras droit 44 horizontal dont une extrémité 46 est librement articulée à l'extrémité supérieure 48 du montant 26 avant droit par une articulation 50 latérale droite formant un pivot non glissant à axe 52 de rotation vertical.

Le bras gauche 43 est articulé au bras droit 44 par une articulation centrale 53 formant un pivot non glissant à axe 54 vertical. La longueur des bras 43, 44 est telle que l'axe 54 vertical de l'articulation 53 centrale est à égale distance des deux axes 51, 52 des articulations 49, 50 latérales. Le bras gauche 43 présente une extension 55 au-delà de l'axe 54 vertical de l'articulation 53 centrale. Un vérin 56 permet de contrôler la valeur de l'angle, dit angle de compas, formé entre les deux bras 43, 44 du compas avant 41. Ce vérin 56 comprend un corps 57 articulé au bras droit 44, et une tige 58 d'actionnement dont l'extrémité est articulée à l'extension 55 du bras gauche 43. Lorsque la tige 58 d'actionnement du vérin 56 est déployée, l'angle de compas diminue. Lorsque la tige 58 d'actionnement du vérin 56 est rétractée, l'angle de compas augmente. Lorsque le vérin 56 n'est pas alimenté en liquide, il est bloqué en position, le compas avant 41 étant également bloqué dans une position angulaire déterminée.

Les bras 43, 44 du compas avant 41 présentent également avantageusement des plaques 59 perforées, notamment des paires de plaques perforées superposées verticalement dotées de trous verticaux. Dans le mode de réalisation représenté, ces plaques 59 perforées sont ménagées à l'arrière des bras 43, 44 du compas avant 41. Rien n'empêche de prévoir, en variante ou en combinaison, que des plaques similaires soient ménagées à l'avant des bras 43, 44 du compas avant 41.

Le compas avant 41 est agencé de telle sorte que l'angle de compas qu'il forme est inférieur à 180° et présente un sommet toujours orienté vers l'avant.

Le compas arrière 42 comprend :
- un bras gauche 63 horizontal dont une extrémité 65 est librement articulée à l'extrémité supérieure 67 du montant 29 arrière gauche par une articulation 69 latérale gauche formant un pivot non glissant à axe 71 de rotation vertical,
- un bras droit 64 horizontal dont une extrémité 66 est librement articulée à l'extrémité supérieure 68 du montant 30 arrière droit par une articulation 70 latérale droite formant un pivot non glissant à axe 72 de rotation vertical.

Le bras gauche 63 est articulé au bras droit 64 par une articulation centrale 73 formant un pivot non glissant à axe 74 vertical. La longueur des bras 63, 64 est telle que l'axe 74 vertical de l'articulation 73 centrale est à égale distance des deux axes 71, 72 des articulations 69, 70 latérales. Le bras droit 64 présente une extension 75 au-delà de l'axe 74 vertical de l'articulation 73 centrale. Un vérin 76 permet de contrôler la valeur de l'angle, dit angle de compas, formé entre les deux bras 63, 64 du compas arrière 42. Ce vérin 76 comprend un corps 77 articulé au bras gauche 63, et une tige 78 d'actionnement dont l'extrémité est articulée à l'extension 75 du bras droit 64. Lorsque la tige 78 d'actionnement du vérin 76 est déployée, l'angle de compas diminue. Lorsque la tige 78 d'actionnement du vérin 76 est rétractée, l'angle de compas augmente. Lorsque le vérin 76 n'est pas alimenté en liquide, il est bloqué en position, le compas arrière 42 étant également bloqué dans une position angulaire déterminée.

Dans certains modes de réalisation non représentés, au moins un premier vérin de renforcement est utilisé pour éviter une rotation non souhaitée au niveau des liaisons entre chaque bras d'au moins un compas avant et les deux demi-châssis latéraux. En particulier, de préférence, un premier vérin de renforcement est utilisé pour éviter une rotation non souhaitée au niveau des liaisons entre chaque bras du compas avant et les deux demi-châssis latéraux. Un deuxième vérin de renforcement est utilisé pour éviter une rotation non souhaitée au niveau des liaisons entre chaque bras du compas arrière et les deux demi-châssis latéraux. Le premier vérin de renforcement comprend un corps articulé au montant avant gauche, et une tige d'actionnement dont l'extrémité est articulée au bras gauche du compas avant. Le deuxième vérin de renforcement comprend un corps articulé au montant arrière droit, et une tige d'actionnement dont l'extrémité est articulée au bras droit du compas arrière. Ainsi, chaque vérin de renforcement permet d'éviter un déplacement des demi-châssis l'un par rapport à l'autre. Chaque vérin de renforcement permet ainsi d'améliorer la rigidité du châssis.

De préférence, chaque vérin de renforcement est placé du côté intérieur du compas auquel il est assemblé, c'est-à-dire entre les deux bras du compas. En outre, comme représenté sur les figures, les vérins 56 et 76 sont disposés du côté extérieur du compas auquel ils sont assemblés, le côté extérieur étant opposé au côté intérieur.

Les bras 63, 64 du compas arrière 42 présentent également avantageusement des plaques 79 perforées, notamment des paires de plaques perforées superposées verticalement dotées de trous verticaux permettant la fixation d'équipements ou de dispositifs de traitement agricole. Dans le mode de réalisation représenté, ces plaques 79 perforées sont ménagées à l'avant des bras 63, 64 du compas arrière 42. Rien n'empêche de prévoir, en variante ou en combinaison, que des plaques similaires soient ménagées à l'arrière des bras 63, 64 du compas arrière 42.

Le compas arrière 42 est agencé de telle sorte que l'angle de compas qu'il forme est inférieur à 180° et présente un sommet toujours orienté vers l'arrière.

Les bras gauches 43, 63 et droits 44, 64 des compas 41, 42 ont les mêmes longueurs. Les compas avant 41 et arrière 42 présentent les mêmes formes et dimensions et les vérins 56, 76 sont identiques de sorte que, en toute position d'ajustement de la largeur du châssis, les compas avant 41 et arrière 42 ont la même valeur d'angle de compas, leurs sommets étant orientés en sens opposés, et les longerons 23, 24 des deux demi-châssis latéraux 21, 22 sont parallèles l'un à l'autre et définissent un axe longitudinal du châssis et du véhicule agricole. En outre, dans le mode de réalisation représenté, les compas avant 41 et arrière 42 s'étendent tous deux dans un même plan horizontal. Rien n'empêche cependant que les compas avant 41 et arrière 42 s'étendent dans des plans horizontaux distincts.

Les pivots non glissants de chaque articulation de chaque compas 41, 42 peuvent être réalisés de toute façon bien connue en elle-même, notamment par des paliers lisses et/ou des roulements.

Le châssis selon l'invention ainsi formé est globalement symétrique par rapport à un plan vertical longitudinal médian. Il est également globalement symétrique par rapport à un plan vertical transversal médian, à l'exception de la forme exacte et des dimensions des plaques avant 33, 34 qui sont légèrement différentes de celles des plaques arrière 35, 36. Il est d'une très grande rigidité et d'une très grande résistance pour un poids faible et une grande simplicité. Il permet un ajustement simple et fiable de la largeur du châssis par modification de l'angle de compas des compas 41, 42. Il permet de ménager un grand espace central pour la mise en place de différents dispositifs de traitement agricole, qui peuvent être disposés aussi bien en hauteur qu'à proximité immédiate du sol.

Les plaques perforées arrière 35, 36 présentent des extensions 85, respectivement 86 s'étendant horizontalement en porte-à-faux vers l'arrière des extrémités supérieures 67, 68 des montants arrière 29, 30. Des traverses 87 horizontales sont fixées à l'extension 85 des plaques perforées arrière gauches 35 de façon à s'étendre au-dessus du plan horizontal des compas 41, 42. Des traverses 88 horizontales sont également fixées à l'extension 86 des plaques perforées arrière droites 36 de façon à s'étendre au-dessus du plan horizontal des compas 41, 42, les traverses 88 droites étant décalées longitudinalement des traverses 87 gauches. Les traverses 87, 88 supportent une platine 89 formée, dans l'exemple représenté, d'un cadre métallique. Pour ce faire, les traverses 87, 88 sont montées coulissantes sous la platine 89.

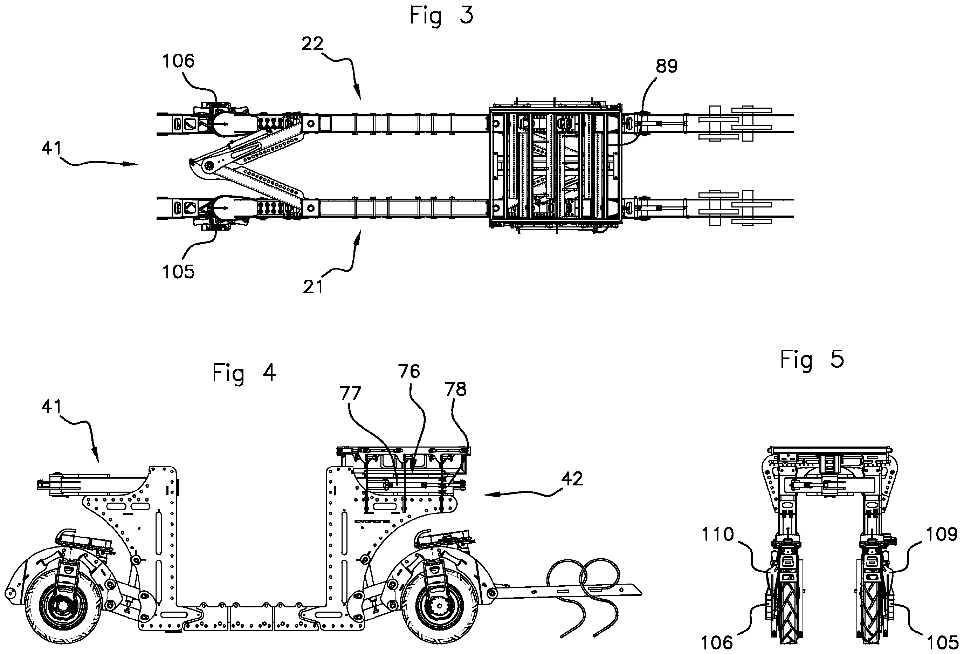

Chaque traverse 87, 88 présente une longueur qui est inférieure ou égale, ou peu supérieure, à l'encombrement hors tout en largeur du châssis défini par les demi-châssis latéraux 21, 22 en position de largeur minimale. De même, la largeur de la platine 89 est inférieure ou égale, ou peu supérieure, à l'encombrement hors tout en largeur du châssis défini par les demi-châssis latéraux 21, 22 en position de largeur minimale. Ainsi, en position de largeur minimale telle que représenté figure 3, les traverses 87, 88 et la platine 89 ne dépassent sensiblement pas vers l'extérieur au-delà des demi-châssis latéraux 21, 22.

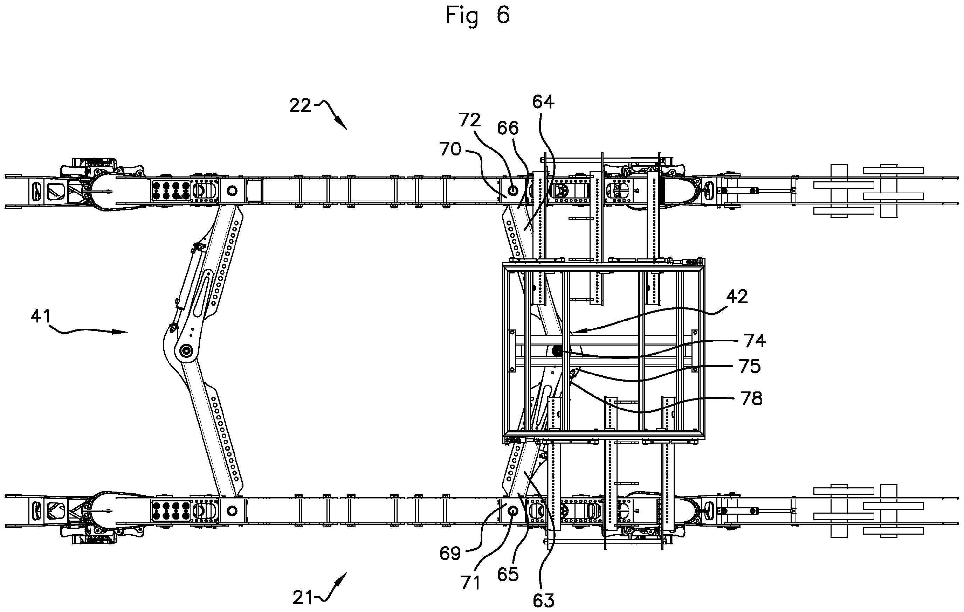

Dans l'exemple représenté, en position de largeur minimale (figure 3), les compas 41, 42 présentent un angle de compas qui est de l'ordre de 45°. Dans cette position de largeur minimale, la largeur hors tout du châssis peut être par exemple typiquement de l'ordre de 0,8 m. En position de largeur maximale (notamment figure 6), les compas 41, 42 présentent un angle de compas qui est de l'ordre de 150°. Dans cette position de largeur maximale, la largeur hors tout du châssis peut être par exemple typiquement de l'ordre de 2 m. D'autres valeurs sont possibles.

Les plaques perforées avant 33, 34 présentent également avantageusement des extensions 83, respectivement 84 s'étendant horizontalement en porte-à-faux vers l'avant des extrémités supérieures 47, 48 des montants avant 25, 26. Ces extensions 83, 84 permettent notamment la fixation d'équipements ou de dispositifs de traitement agricole. Bien que non représentée dans le mode de réalisation illustré sur les figures, une platine horizontale peut aussi être prévue, supportée par des traverses coulissantes fixées aux extensions 83, 84 avant.

La platine 89 arrière permet en particulier de supporter un moteur thermique 90 et son réservoir 91, une batterie d'accumulateurs 94, une centrale 92 hydraulique associée à ce moteur thermique 90, reliée par des conduites et des vannes aux différents actionneurs hydrauliques du véhicule et adaptée pour fournir un liquide sous pression, et une unité 93 électronique de commande de l'ensemble du véhicule, de la centrale 92 hydraulique et des différents actionneurs, y compris ceux des dispositifs de traitement agricole pouvant être installés sur le véhicule.

En particulier, cette unité 93 permet de commander les vérins 56, 76 des compas 41, 42 pour faire varier la distance entre les deux demi-châssis 21, 22 et la largeur châssis. Pour ce faire, chaque vérin 56, 76 est avantageusement doté d'un capteur de position, par exemple du type à capteur inductif relié à l'unité 93 pour lui délivrer un signal représentatif de la position de la tige d'actionnement du vérin. De préférence, l'unité 93 est adaptée pour commander les deux vérins 56, 76 en synchronisme.

Quatre roues 95 à 98 sont montées en partie basse des montants 25, 26, 29, 30 du châssis : une roue 95 avant gauche est montée en partie basse vers l'avant du montant 25 avant gauche, une roue 96 avant droite est montée en partie basse vers l'avant du montant 26 avant droit, une roue 97 arrière gauche est montée en partie basse vers l'arrière du montant arrière gauche 29, et une roue 98 arrière droite est montée en partie basse vers l'arrière du montant arrière droit 30.

Chaque roue 95 à 98 est directionnelle, motrice et indépendante, c'est-à-dire peut être orientée et entraînée en rotation indépendamment des autres roues.

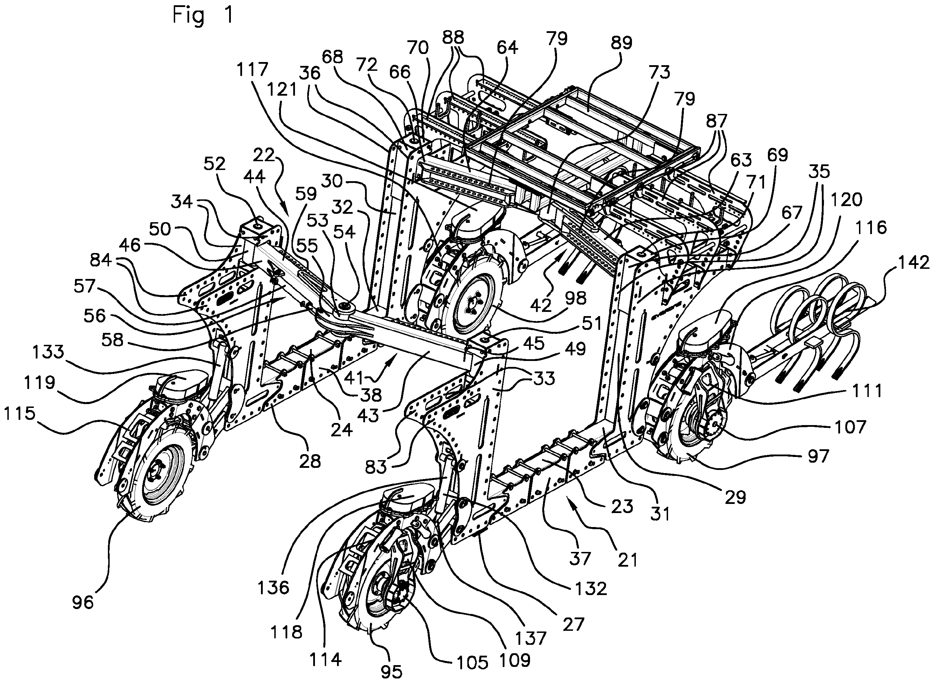

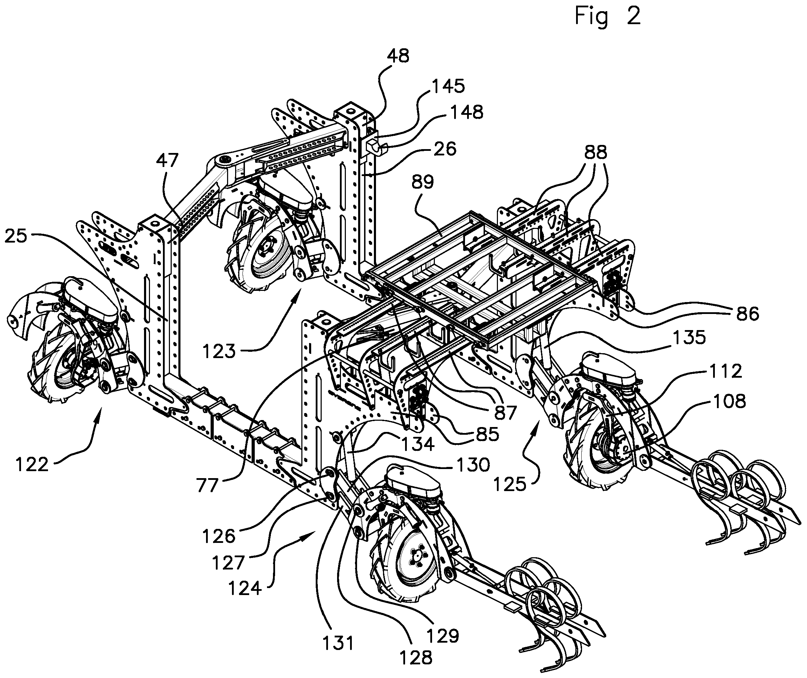

Chaque roue 95 à 98 est orientable par rapport à l'axe longitudinal selon un angle d'orientation pouvant être compris entre 0° et 90°. Pour un angle d'orientation de 0° de chacune des roues (figure 1 notamment), le véhicule se déplace selon l'axe longitudinal. Pour un angle d'orientation de 90° (figure 2) de chacune des roues 95 à 98, le véhicule se déplace orthogonalement à l'axe longitudinal. En outre, pour un angle d'orientation de 90° de chacune des roues 95 à 98, l'ajustement en largeur du châssis, qui correspond à un ajustement de la voie du véhicule selon l'invention, peut être facilement réalisé par simple actionnement des vérins 56, 76.

Chaque roue 95 à 98 est accouplée à l'arbre moteur horizontal d'un moteur 105, respectivement 106, 107, 108 hydraulique qui lui est propre. Ce moteur 105 à 108 est porté à l'extrémité inférieure d'un porte-moyeu 109, respectivement 110, 111, 112 monté pivotant autour d'un axe vertical par rapport à un arceau 114, respectivement 115, 116, 117 assemblé au montant 25, 26, 29, 30 du demi-châssis 21, 22 latéral correspondant et portant un actionneur 118, respectivement 119, 120, 121 (vérin rotatif) agencé pour contrôler la position angulaire du porte-moyeu 109, respectivement 110, 111, 112. L'arceau 114 à 117 est avantageusement assemblé à l'extrémité inférieure du montant 25, 26, 29, 30 par l'intermédiaire d'une structure 122, respectivement 123, 124, 125 à parallélogramme déformable.

Chaque structure 122 à 125 à parallélogramme déformable présente deux pivots 126, 127 articulés l'un au-dessus de l'autre au montant 25, 26, 29, 30 (notamment aux plaques 33 à 36 perforées fixées à ce montant) selon des axes de pivotements horizontaux, deux pivots 128, 129 articulés l'un au-dessus de l'autre à l'arceau 114 à 117 selon des axes de pivotements horizontaux. Le plan des axes de pivotement des pivots 126, 127 est parallèle au plan des axes de pivotement des pivots 128, 129. Ces plans sont au moins sensiblement verticaux. Deux bras 130, 131 parallèles de même longueur relient les pivots 126 à 129 de façon à former un parallélogramme déformable. Un premier bras 130 relie les pivots 126 et 128 supérieurs. Un deuxième bras 131 relie les pivots 127 et 129 inférieurs.

Un vérin 132, respectivement 133, 134, 135 est interposé entre le montant 25, 26, 29, 30 et le bras supérieur 130 de chaque structure 122, respectivement 123, 124, 125 à parallélogramme déformable. Chaque vérin 132 à 135 comprend un corps 136 de vérin articulé selon un axe de pivotement horizontal transversal au montant 25, 26, 29, 30 correspondant (notamment aux plaques 33 à 36 perforées fixées à ce montant), et une tige 137 d'actionnement articulée selon un axe de pivotement horizontal transversal au bras 130 supérieur. Lorsque les vérins 132 à 135 sont déployés, les roues 95 à 98 sont déplacées vers le bas par rapport au châssis, ce qui permet de faire monter ce dernier par rapport au sol (comme représenté notamment figures 1 et 2). Lorsque les vérins 132 à 135 sont rétractés, les roues 95 à 98 sont déplacées vers le haut par rapport au châssis, ce qui permet de faire descendre ce dernier par rapport au sol (comme représenté notamment figures 4 et 5).

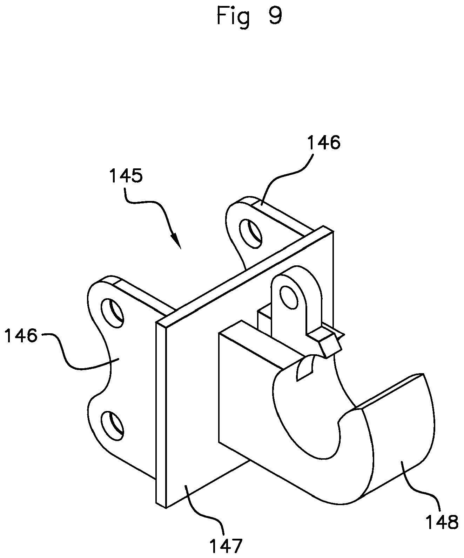

Différents dispositifs de traitement agricole peuvent être facilement et rapidement installés de façon démontable sur un châssis selon l'invention. Pour ce faire, il est par exemple possible d'utiliser une bride 145 de montage telle que représentée figure 9, comprenant deux flasques 146 latéraux perforés portant une plaque 147 dotée d'un crochet 148 d'attelage apte à recevoir une boule d'attelage d'un outillage agricole. Les flasques 146 et les trous qu'ils comportent sont adaptés pour permettre la fixation démontable par des boulons de la bride 145 de montage entre les plaques perforées parallèles de chaque paire de plaques perforées 33 à 36 du châssis. Une bride 145 de montage est ainsi représentée à titre d'exemple fixée au montant avant droit 26 sur la figure 2.

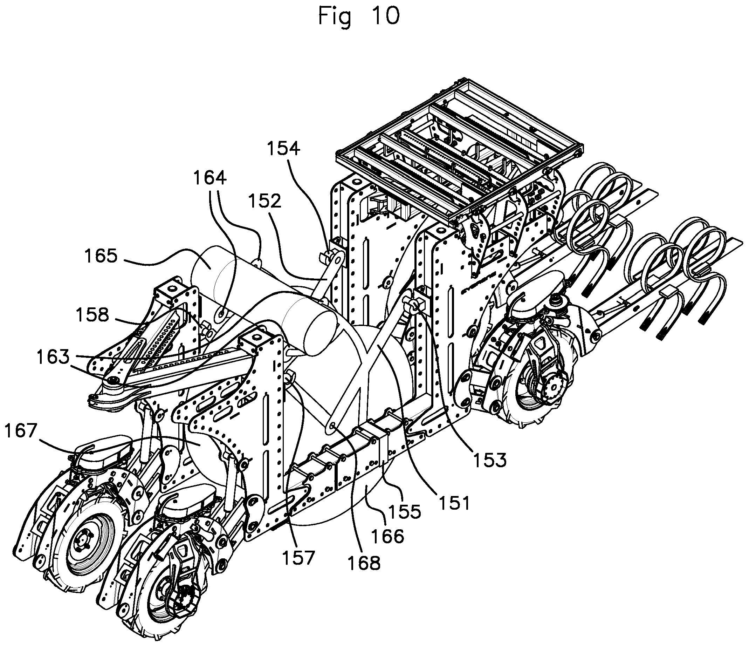

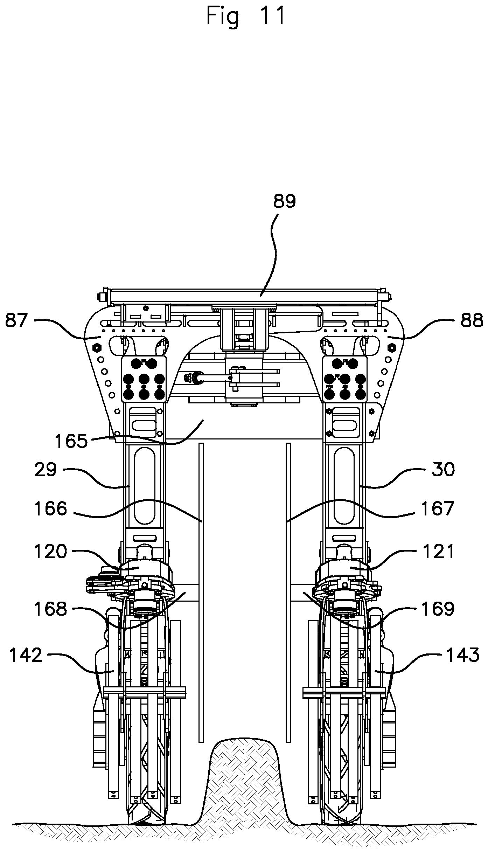

Les figures 10 et 11 représentent un exemple d'outillage agricole pouvant être installé sur un châssis selon l'invention pour le paillage de buttes de terre. Cet outillage comprend un support 151 monté sur le demi-châssis latéral gauche 21 et un support 152 droit monté sur le demi-châssis latéral droit 22. Chaque support 151, 152 est fixé au montant arrière 29, 30 correspondant par une bride 145 de montage recevant une boule 153, 154 d'attelage du support 151, 152 comme décrit ci-dessus. Chaque support 151, 152 est également supporté par le longeron 23, 24 correspondant grâce à un étrier 155, 156. Chaque support 151, 152 est fixé au montant avant 25, 26 correspondant par une bride 145 de montage recevant une boule 157, 158 d'attelage du support 151, 152. Chaque support 151, 152 comporte également une paire de galets 163, 164 montés libres en rotation à l'extrémité de bras autour d'axes de rotation horizontaux transversaux, les galets de chaque paire de galets étant espacés longitudinalement pour pouvoir recevoir entre eux et guider en rotation un rouleau 165 de film de paillage s'étendant selon la largeur du châssis, en partie supérieure des supports 151, 152 comme représenté figure 10.

Chaque support 151, 152 porte également à l'intérieur du demi-châssis 21, 22 correspondant, un disque 166, 167 monté librement rotatif par rapport au support 151, 152 autour d'un axe de rotation 168, 169 horizontal transversal, les axes de rotation 168, 169 des deux disques 166, 167 étant colinéaires. Les deux disques 166, 167 présentent la même dimension, sont parallèles l'un à l'autre, s'étendent chacun dans un plan vertical longitudinal et permettent le déroulage et l'application du film de paillage autour d'une butte de terre comme représenté figure 11. Comme on le voit, avec cet outillage, la largeur du châssis est ajustée à une valeur faible choisie en fonction de la largeur de la butte de terre à pailler, par exemple à sa valeur minimale, de telle sorte que les deux disques66, 167 s'étendent d'un côté et de l'autre de la butte de terre.

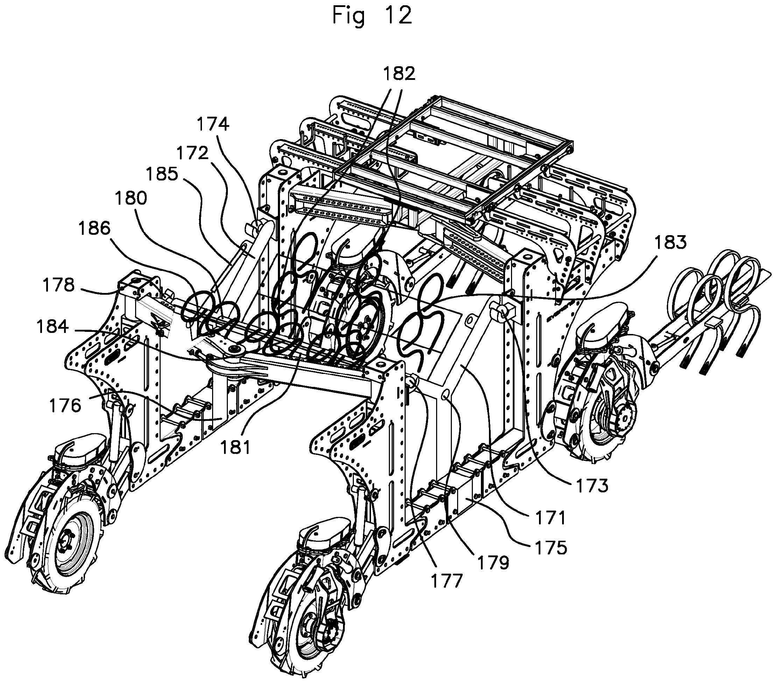

La figure 12 représente un exemple d'outillage de binage bidirectionnel pouvant être installé de façon démontable sur un châssis selon l'invention. Dans cet exemple, l'outillage comprend également un support gauche 171 monté sur le demi-châssis latéral gauche 21 et un support 172 droit monté sur le demi-châssis latéral droit 22. Chaque support 171, 172 est fixé au montant arrière 29, 30 correspondant par une bride 145 de montage recevant une boule 173, 174 d'attelage du support 171, 172 comme décrit ci-dessus. Chaque support 171, 172 est également supporté par le longeron 23, 24 correspondant grâce à un étrier 175, 176. Chaque support 171, 172 est fixé au montant avant 25, 26 correspondant par une bride 145 de montage recevant une boule 177, 178 d'attelage du support 171, 172. Chaque support 171, 172 porte un palier 179, 180 de guidage en rotation d'un arbre 181 horizontal transversal d'un équipage 182 de binage bidirectionnel comprenant, à l'arrière de l'arbre 181 transversal, des outils 183 de binage adaptés pour biner la terre lorsque le véhicule se déplace vers l'avant, et, à l'avant de l'arbre 181 transversal, des outils 184 de binage adaptés pour biner la terre lorsque le véhicule se déplace vers l'arrière. La position angulaire de l'arbre 181 et de l'équipage 182 de binage est ajusté par un vérin 185 interposé entre le support 172 droit et une bielle 186 solidaire en rotation de l'arbre 181. Lorsque le vérin 185 est rétracté, les outils 183 de binage vers l'avant sont en position basse de travail et les outils 184 de binage vers l'arrière sont en position haute inactive. Lorsque le vérin 185 est déployé, les outils 183 de binage vers l'avant sont en position haute inactive et les outils 184 de binage vers l'arrière sont en position basse de travail.

De nombreux autres exemples de dispositifs de traitement agricole peuvent être installés sur un châssis selon l'invention : dispositifs de pulvérisation, réservoirs, outils de taille, outils de labourage, semoirs, outils de broyage de végétation, outils de tonte, outils de plantation, outils et accessoires d'arrachage, outils d'épandage, outils d'arrosage, dispositif de pose de goutte à goutte ou autres appareils d'irrigation, outils d'épamprage, outils de sarclage, outils de rognage, outils ou accessoires de récolte ou ramassage.

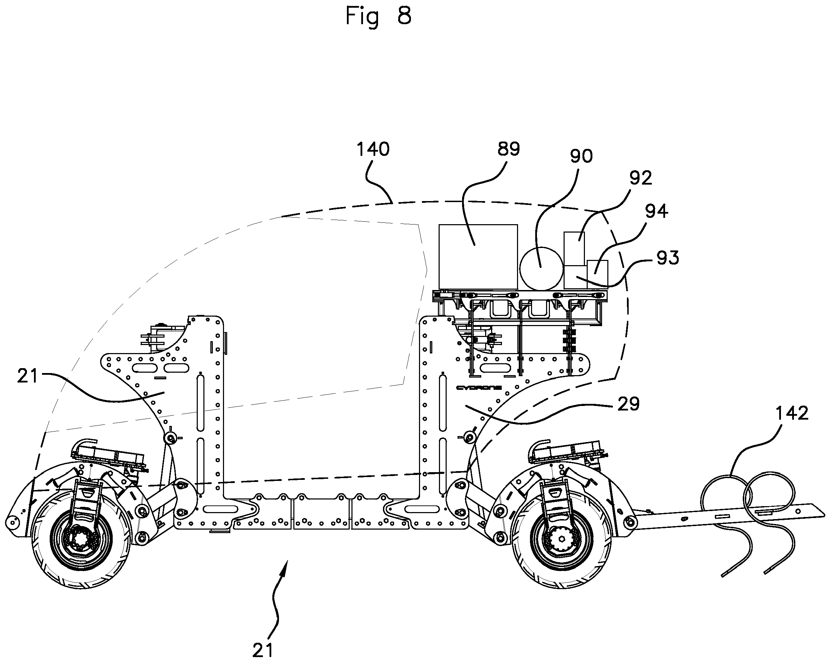

Comme représenté figure 8, un véhicule selon l'invention peut comporter une carrosserie de protection 140. En outre, des outillages 142, 143 effaceurs de traces peuvent être fixés à l'arrière des roues arrière 97, 98.

Un véhicule selon l'invention peut également comporter un siège et un poste de conduite du véhicule par un pilote porté par le véhicule. Un tel siège peut être fixé par exemple en partie basse du châssis, sur le côté vers l'extérieur de l'un des longerons 23, 24. Il peut servir également à recevoir un opérateur humain réalisant un traitement manuel.

En variante, un véhicule selon l'invention peut être télécommandé, soit par un opérateur humain à l'aide d'une télécommande, soit même de façon automatique et robotisée à partir d'une centrale de commande. Une telle centrale de commande peut également même être incorporée au véhicule selon l'invention qui est alors entièrement autonome dans ses déplacements et peut être guidé grâce à une localisation par satellite et/ou par tout dispositif connu en lui-même permettant le guidage autonome de véhicules automoteurs.

L'invention s'applique à tout véhicule agricole, en particulier pour le maraîchage, la viticulture, l'arboriculture, la grande culture (notamment céréalière et oléagineux). Un même véhicule selon l'invention peut aisément être utilisé par l'agriculteur pour différentes applications, par exemple du maraîchage et/ou à la viticulture et/ou à l'arboriculture et/ou à la culture d'asperges ou autres.

L'invention peut faire l'objet de nombreuses variantes et applications autres que celles décrites ci-dessus, et n'est limité que par les revendications ci-jointes.

## Revendications

1. Châssis de véhicule agricole comprenant :
- deux demi-châssis (21, 22) latéraux reliés l'un à l'autre à distance l'un de l'autre de façon à former une structure rigide,
- un dispositif d'ajustement de la distance relative entre les deux demi-châssis (21, 22) latéraux, ledit dispositif d'ajustement comprenant :
• au moins un compas (41, 42) :
o comprenant deux bras rigides articulés l'un à l'autre par une articulation, dite articulation (53, 73) centrale :
▪ comprenant un pivot,
▪ et permettant d'orienter les deux bras l'un par rapport à l'autre de façon à ce qu'ils forment entre eux un angle, dit angle de compas, compris entre 0° et 180°,
∘ chaque bras du compas étant articulé respectivement à l'un des deux demi-châssis (21, 22) latéraux par une articulation, dite articulation (49, 50, 69, 70) latérale, comprenant un pivot,
∘ lesdits pivots de l'articulation centrale et des articulations latérales présentant des axes de pivots qui sont parallèles entre eux,
• un dispositif (56, 76, 93) de réglage de l'angle de compas, ce dispositif de réglage de l'angle de compas étant adapté pour permettre un blocage de l'angle de compas après réglage,
**caractérisé en ce que** le dispositif (56, 76, 93) de réglage de l'angle de compas d'au moins un compas comporte un vérin comprenant un corps porté par l'un des deux bras du compas et une tige d'actionnement articulée à l'autre bras du compas.

2. Châssis selon la revendication 1, **caractérisé en ce que** le dispositif (56, 76, 93) de réglage de l'angle de compas d'au moins un compas est adapté pour permettre un réglage angulaire de l'articulation (53, 73) centrale et un blocage de ladite articulation (53, 73) centrale après réglage.

3. Châssis selon l'une quelconque des revendications 1 ou 2, **caractérisé en ce que** le dispositif (56, 76, 93) de réglage de l'angle de compas d'au moins un compas est adapté pour imposer une valeur de l'angle de compas supérieure à 0° et inférieure à 180°, valeurs exclues.

4. Châssis selon l'une des revendications 1 à 3, **caractérisé en ce que** le dispositif d'ajustement comprend également au moins un vérin de renforcement comprenant :
- un corps porté par l'un parmi un demi-châssis (21, 22) latéral et un bras d'un compas, le bras étant articulé à ce demi-châssis, et
- une tige d'actionnement porté par l'autre parmi ce même demi-châssis latéral et ce bras de ce même compas.

5. Châssis selon l'une des revendications 1 à 4, **caractérisé en ce que** ledit dispositif d'ajustement comprend une pluralité de compas (41, 42) et une unité (93) de commande du dispositif de réglage de l'angle de compas des différents compas, cette unité de commande étant adaptée pour maintenir une même orientation relative des deux demi-châssis latéraux l'un par rapport à l'autre.

6. Châssis selon l'une des revendications 1 à 5, **caractérisé en ce que** l'articulation (53, 73) centrale d'au moins un compas (41, 42 comprend un pivot non glissant à axe vertical, et **en ce que** chaque articulation (49, 50, 69, 70) latérale d'au moins un compas (41, 42) comprend un pivot non glissant à axe vertical.

7. Châssis selon l'une des revendications 1 à 6, **caractérisé en ce que** ledit dispositif d'ajustement comprend au moins un compas (41) avant dont le sommet de l'angle de compas est orienté vers l'avant et au moins un compas (42) arrière dont le sommet de l'angle de compas est orienté vers l'arrière.

8. Châssis selon la revendication 7, **caractérisé en ce que** les compas (41) avant et (42) arrière ont les mêmes dimensions et les mêmes angles de compas.

9. Châssis selon l'une des revendications 1 à 8, **caractérisé en ce que** chaque demi-châssis (21, 22) latéral comprend :
- un longeron (23, 24),
- un montant (29, 26) avant s'étendant verticalement au moins vers le haut à partir d'une extrémité avant du longeron,
- un montant (29, 30) arrière s'étendant verticalement au moins vers le haut à partir d'une extrémité arrière du longeron,
et **en ce que** le dispositif d'ajustement comprend un compas (41) avant s'étendant entre les montants avant articulé à ces derniers, et un compas (42) arrière s'étendant entre les montants arrières et articulé à ces derniers.

10. Châssis selon la revendication 9, **caractérisé en ce que** chaque compas (41, 42) est articulé entre des extrémités supérieures desdits montants (25, 26, 29, 30).

11. Véhicule agricole comprenant un châssis selon l'une des revendications 1 à 10.

## Patentansprüche

1. Fahrgestell eines landwirtschaftlichen Fahrzeugs, umfassend:
- zwei seitliche Halbfahrgestelle (21, 22), die auf Abstand zueinander miteinander verbunden sind, um eine starre Struktur zu bilden,
- eine Vorrichtung zum Anpassen des Abstands zueinander, zwischen den beiden seitlichen Halbfahrgestellen (21, 22), wobei die Vorrichtung zum Anpassen umfasst:
-- mindestens eine Klappschere (41, 42):
--- umfassend zwei durch ein Gelenk, Mittelgelenk (53, 73) genannt, aneinander angelenkte starre Arme:
---- einen Drehzapfen umfassend,
---- und das es ermöglicht, die beiden Arme zueinander auszurichten, um zwischen sich einen Winkel, Klappscherenwinkel genannt, zu bilden, der zwischen 0° und 180° enthalten ist,
--- wobei jeder Arm der Klappschere jeweils an einem der beiden seitlichen Halbfahrgestelle (21, 22) durch ein Gelenk, Seitengelenk (49, 50, 69, 70) genannt, angelenkt ist, das einen Drehzapfen umfasst,
--- wobei die Drehzapfen des Mittelgelenks und der Seitengelenke Drehachsen aufweisen, die parallel zueinander sind,
-- eine Vorrichtung (56, 76, 93) zum Einstellen des Klappscherenwinkels, wobei diese Vorrichtung zum Einstellen des Klappscherenwinkels ausgeführt ist, um eine Sperre des Klappscherenwinkels nach dem Einstellen zu ermöglichen,
**dadurch gekennzeichnet, dass** die Vorrichtung (56, 76, 93) zum Einstellen des Klappscherenwinkels mindestens einer Klappschere einen Zylinder beinhaltet, der einen Körper umfasst, der durch einen der beiden Arme der Klappschere getragen wird, und eine Betätigungsstange, die an den anderen Arm der Klappschere angelenkt ist.

2. Fahrgestell nach Anspruch 1, **dadurch gekennzeichnet, dass** die Vorrichtung (56, 76, 93) zum Einstellen des Klappscherenwinkels mindestens einer Klappschere ausgeführt ist, um eine Winkeleinstellung des Mittelgelenks (53, 73) und eine Sperre des Mittelgelenks (53, 73) nach dem Einstellen zu ermöglichen.

3. Fahrgestell nach einem der Ansprüche 1 oder 2, **dadurch gekennzeichnet, dass** die Vorrichtung (56, 76, 93) zum Einstellen des Klappscherenwinkels mindestens einer Klappschere ausgeführt ist, um einen Wert des Klappscherenwinkels größer als 0° und kleiner als 180°, jeweils exklusive, durchzusetzen.

4. Fahrgestell nach einem der Ansprüche 1 bis 3, **dadurch gekennzeichnet, dass** die Vorrichtung zum Anpassen auch mindestens einen Verstärkungszylinder umfasst, Folgendes umfassend:
- einen Körper, der durch eines aus einem seitlichen Halbfahrgestell (21, 22) und einem Arm einer Klappschere getragen wird, wobei der Arm an dieses Halbfahrgestell angelenkt ist, und
- eine Betätigungsstange, die durch das andere dieses selben seitlichen Halbfahrgestells und dieser selben Klappschere getragen wird.

5. Fahrgestell nach einem der Ansprüche 1 bis 4, **dadurch gekennzeichnet, dass** die Vorrichtung zum Anpassen eine Vielzahl von Klappscheren (41, 42) und eine Einheit (93) zum Steuern der Vorrichtung zum Einstellen des Klappscherenwinkels der verschiedenen Klappscheren umfasst, wobei diese Einheit zum Steuern ausgeführt ist, um eine selbe Ausrichtung der beiden seitlichen Halbfahrgestelle zueinander beizubehalten.

6. Fahrgestell nach einem der Ansprüche 1 bis 5, **dadurch gekennzeichnet, dass** das Mittengelenk (53, 73) mindestens einer Klappschere (41, 42) einen nicht gleitenden Drehzapfen mit vertikaler Achse umfasst, und dadurch, dass jedes Seitengelenk (49, 50, 69, 70) mindestens einer Klappschere (41, 42) einen nicht gleitenden Drehzapfen mit vertikaler Achse umfasst.

7. Fahrgestell nach einem der Ansprüche 1 bis 6, **dadurch gekennzeichnet, dass** die Vorrichtung zum Anpassen mindestens eine vordere Klappschere (41) umfasst, deren Scheitelpunkt des Klappscherenwinkels nach vorne ausgerichtet ist, und mindestens eine hintere Klappschere (42), deren Scheitelpunkt des Klappscherenwinkels nach hinten ausgerichtet ist.

8. Fahrgestell nach Anspruch 7, **dadurch gekennzeichnet, dass** die vordere (41) und hintere (42) Klappschere dieselben Abmessungen und dieselben Klappscherenwinkel aufweisen.

9. Fahrgestell nach einem der Ansprüche 1 bis 8, **dadurch gekennzeichnet, dass** jedes seitliche Halbfahrgestell (21, 22) umfasst:
- einen Längsträger (23, 24),
- einen vorderen Holm (29, 26), der sich vertikal mindestens nach oben ausgehend von einem vorderen Ende des Längsträgers erstreckt,
- einen hinteren Holm (29, 30), der sich vertikal mindestens nach oben ausgehend von einem hinteren Ende des Längsträgers erstreckt,
und dadurch, dass die Vorrichtung zum Anpassen eine vordere Klappschere (41) umfasst, die sich zwischen den vorderen Holmen, an diesen letzteren angelenkt, erstreckt und eine hintere Klappschere (42), die sich zwischen den hinteren Holmen, und an diesen letzteren angelenkt, erstreckt.

10. Fahrgestell nach Anspruch 9, **dadurch gekennzeichnet, dass** jede Klappschere (41, 42) zwischen den oberen Enden der Holme (25, 26, 29, 30) angelenkt ist.

11. Landwirtschaftliches Fahrzeug, ein Fahrgestell nach einem der Ansprüche 1 bis 10 umfassend.

## Claims

1. An agricultural vehicle chassis comprising:
- two side half-chassis (21, 22) connected to each other at a distance from each other to form a rigid structure,
- a device for adjusting the relative distance between the two side half-chassis (21, 22), said adjustment device comprising:
-- at least one compass (41, 42):
--- comprising two rigid arms hinged to each other by a hinge, called central hinge (53, 73):
---- comprising a pivot,
---- and allowing the two arms to be oriented relative to each other so that they form an angle therebetween, called a compass angle, comprised between 0° and 180°,
--- each arm of the compass being respectively hinged to one of the two side half-chassis (21, 22) by a hinge, called side hinge (49, 50, 69, 70), comprising a pivot,
--- said pivots of the central hinge and of the side hinges having pivot axes which are parallel to each other,
-- a device (56, 76, 93) for adjusting the compass angle, this device for adjusting the compass angle being adapted to allow a blocking of the compass angle after adjustment,
**characterised in that** the device (56, 76, 93) for adjusting the compass angle of at least one compass includes a cylinder comprising a body carried by one of the two arms of the compass and an actuating rod hinged to the other arm of the compass.

2. The chassis according to claim 1, **characterised in that** the device (56, 76, 93) for adjusting the compass angle of at least one compass is adapted to allow angular adjustment of the central hinge (53, 73) and a blocking of said central hinge (53, 73) after adjustment.

3. The chassis according to any one of claims 1 or 2, **characterised in that** the device (56, 76, 93) for adjusting the compass angle of at least one compass is adapted to impose a value of the compass angle greater than 0° and less than 180°, values excluded.

4. The chassis according to one of claims 1 to 3, **characterised in that** the adjustment device also comprises at least one reinforcing cylinder comprising:
- a body carried by one of a side half-chassis (21, 22) and an arm of a compass, the arm being hinged to this half-chassis, and
- an actuating rod carried by the other of this same side half-chassis and this arm of this same compass.

5. The chassis according to one of claims 1 to 4, **characterised in that** said adjustment device comprises a plurality of compasses (41, 42) and a unit (93) for controlling the device for adjusting the compass angle of the various compasses, this control unit being adapted to maintain the same relative orientation of the two side half-chassis relative to each other.

6. The chassis according to one of claims 1 to 5, **characterised in that** the central hinge (53, 73) of at least one compass (41, 42) comprises a non-sliding pivot having a vertical axis, and **in that** each side hinge (49, 50, 69, 70) of at least one compass (41, 42) comprises a non-sliding pivot having a vertical axis.

7. The chassis according to one of claims 1 to 6, **characterised in that** said adjustment device comprises at least one front compass (41) the vertex of the compass angle of which is oriented forwards and at least one rear compass (42) the vertex of the compass angle of which is oriented rearwards.

8. The chassis according to claim 7, **characterised in that** the front (41) and rear (42) compass have the same dimensions and the same compass angles.

9. The chassis according to one of claims 1 to 8, **characterised in that** each side half-chassis (21, 22) comprises:
- a side member (23, 24),
- a front upright (29, 26) extending vertically at least upwards from a front end of the side member,
- a rear upright (29, 30) extending vertically at least upwards from a rear end of the side member,
and **in that** the adjustment device comprises a front compass (41) extending between the front uprights hinged to the latter, and a rear compass (42) extending between the rear uprights and hinged to the latter.

10. The chassis according to claim 9, **characterised in that** each compass (41, 42) is hinged between upper ends of said uprights (25, 26, 29, 30).

11. An agricultural vehicle comprising a chassis according to one of claims 1 to 10.
